# EUROPÄISCHE PATENTSCHRIFT

(11) **EP 2 019 222 B1**
(45) Veröffentlichungstag und Bekanntmachung des Hinweises auf die Patenterteilung: **23.02.2011**
(21) Anmeldenummer: 08104681.5
(22) Anmeldetag: 09.07.2008
(51) Int. Cl.: F16D 3/79

(54) **Flexible Wellenkupplung mit Lamellenpaket und Formschlusselementen**
Flexible shaft coupling with disk pack and form-fitting elements
Accouplement d'arbre flexible doté d'un paquet de lamelles et d'éléments à engagement positif

(30) Priorität: 25.07.2007 DE 102007035199
(43) Veröffentlichungstag der Anmeldung: 28.01.2009
(73) Patentinhaber: Siemens Aktiengesellschaft, 80333 München (DE)
(72) Erfinder: Weiss, Rudolf, 48691 Vreden (DE); Millet, Patrice Dr., 48691 Vreden (DE); Uhlen, Stefan, 49716 Meppen (DE)

(56) Entgegenhaltungen:
- EP-A- 0 191 552
- EP-A- 0 771 960
- US-A- 3 834 182

## Beschreibung

Die Erfindung betrifft eine flexible Wellenkupplung mit mindestens einer Nabe und mindestens einem Anschlussflansch, wobei die mindestens eine Nabe und der mindestens eine Anschlussflansch über ein Lamellenpaket, das mittels umfangsmäßig verteilt angeordneter Spannbolzen wechselweise an dem Anschlussflansch und der Nabe befestigt ist, drehsteif und axial- sowie winkelbeweglich miteinander verbunden sind, und wobei die mindestens eine Nabe einen rohrförmigen Abschnitt zur Aufnahme einer Welle aufweist.

Zum Stand der Technik gehören flexible Wellenkupplungen, deren beide jeweils einen Anschlussflansch aufweisende Kupplungshälften über ein Lamellenpaket, das mittels umfangsmäßig verteilt angeordneten Spannbolzen wechselweise an den beiden Anschlussflanschen befestigt ist, drehsteif und axial- und winkelbeweglich miteinander verbunden sind (siehe z.B. DE 34 43 485 A1und EP 0771960).

Solche Kupplungen werden zur Übertragung von Drehmomenten einzeln oder auch paarweise hintereinander geschaltet eingesetzt. Als Einzelkupplung lässt sie einen Winkel-und Axialversatz und als Kupplungspaar zudem einen Radialversatz (Parallelversatz) der zu verbindenden Wellen zu. Das Lamellenpaket solcher Kupplungen setzt sich aus einzelnen Lamellenlaschen oder aus Lamellenringen zusammen. Die Lamellenlaschen bzw. Lamellenringe sind während der Rotation der verbundenen Wellen einer wechselnden, von der Größe des Winkel- oder Radialversatzes der Wellen abhängigen Biegebeanspruchung unterworfen. Mitunter kommt es bei hohen Drehzahlen der Wellen infolge der mit hoher Frequenz wechselnden Biegebeanspruchung zu einem Lamellenbruch.

Es sind verschiedene Maßnahmen bekannt, die geeignet sind, einen Lamellenbruch zu vermeiden. Diesbezüglich wurden spezielle Lamellenwerkstoffe sowie optimierte geometrische Formen für die Lamellen entwickelt. Häufig werden die Lamellenpakete derartiger Wellenkupplungen aber einfach überdimensioniert, um eine hohe Sicherheit gegen Lamellenbruch zu erzielen, was jedoch hinsichtlich der Herstellungskosten der Wellenkupplungen unbefriedigend ist.

Auch wurden flexible Lamellenpaket-Wellenkupplungen entwickelt, die Formschlusselemente aufweisen, welche eine Überlastung des Lamellenpakets bzw. bei Lamellenbruch eine Unterbrechung der drehstarren Wellenverbindung verhindern. Eine solche Kupplung ist aus der EP 0 191 552 A2 bekannt. Die Nabe der dort dargestellten Kupplung weist einen radial abstehenden Nabenflansch auf, der ähnlich einem gleichseitigen Dreieck ausgebildet ist, wobei die Ecken des im wesentlichen dreieckigen Nabenflansches stumpf abgeflacht sind. Der Nabenflansch ist in einer entsprechend ausgebildeten Ausnehmung eines Hülsenflansches formschlüssig aufgenommen. Der Nabenflansch und der Hülsenflansch sind über ein Lamellenpaket, das mittels umfangsmäßig verteilt angeordneten Spannbolzen wechselweise an dem Nabenflansch und dem Hülsenflansch befestigt ist, drehsteif und axial- und winkelbeweglich miteinander verbunden.

Der vorliegenden Erfindung liegt die Aufgabe zugrunde, eine Wellenkupplung der eingangs genannten Art bereitzustellen, die einen optimierten Überlastschutz bietet.

Diese Aufgabe wird durch eine Wellenkupplung mit den Merkmalen des Anspruchs 1 gelöst.

Die Nabe der erfindungsgemäßen Wellenkupplung weist mehrere flügelartig ausgebildete Nabenflansche auf, die einstückig mit dem rohrförmigen Abschnitt der Nabe verbunden sind und davon radial nach außen abstehen und in einer entsprechenden Anzahl von Ausnehmungen des Anschlussflansches mit Spiel formschlüssig aufgenommen sind, wobei einander zugewandte Flanken der Nabenflansche und Ausnehmungen im Wesentlichen eben ausgebildete Anschlagflächen umfassen, die Kontaktflächen definieren und in Ebenen liegen, welche die die Nabe tragende Welle schneiden.

Durch die erfindungsgemäße Gestaltung des Nabenflansches und des Anschlussflansches lassen sich relativ große Anschlagflächen als Kontaktfläche erzielen, die bei Überlastung des Lamellenpakets oder gar einem Lamellenbruch das herrschende Drehmoment mit entsprechend geringer Flächenpressung zwischen Nabenflansch und Anschlussflansch übertragen. Die radiale Erstreckung der jeweiligen ebenen Kontaktfläche ist vorzugsweise größer/gleich der axialen Breite des Nabenflansches. Eine punktförmige oder stark konzentrierte Flächenpressung zwischen Nabenflansch und Anschlussflansch (Hülsenflansch), wie sie bei der aus der EP 0 191 552 A2 bekannten Wellenkupplung im Falle einer Überlastung des Lamellenpakets oder eines Lamellenbruch auftritt, wird somit bei der erfindungsgemäßen Wellenkupplung vermieden.

Vorzugsweise liegen die im Wesentlichen eben ausgebildeten Anschlagflächen der Nabenflansche in Ebenen, deren Abstand zur Drehachse oder Längsmittelachse der Wellenkupplung weniger als ein Viertel, vorzugsweise weniger als ein Fünftel des mittleren Innendurchmessers des die Welle aufnehmenden rohrförmigen Abschnitts der Nabe beträgt.

Eine besonders bevorzugte Ausgestaltung der erfindungsgemäßen Wellenkupplung ist **dadurch gekennzeichnet, dass** die im Wesentlichen eben ausgebildeten Anschlagflächen im Wesentlichen in Radialebenen liegen, welche die Längsmittelachse bzw. Drehachse der Wellenkupplung schneiden. Mit dieser Ausgestaltung lässt sich hinsichtlich des Überlastschutzes des Lamellenpakets außer einer relativ großen Kontaktfläche zugleich erreichen, dass die bei einem Kontakt der Flanken von Nabenflansch und Anschlussflansch zu übertragende Kraft im wesentlichen senkrecht auf die lastaufnehmende Flanke (Kontaktfläche) einwirkt. Ein materialverschleißender Schlupf zwischen den Kontaktflächen (Flanken) wird somit vermieden.

Das Spiel zwischen den Anschlagflächen der einander zugewandten Flanken von Nabenflansch und Anschlussflansch liegt vorzugsweise im Bereich von 0,25 mm und 1,0 mm.

Weitere bevorzugte und vorteilhafte Ausgestaltungen der erfindungsgemäßen Wellenkupplung sind in den Unteransprüchen angegeben.

Nachfolgend wird die Erfindung anhand einer zwei Ausführungsbeispiele darstellenden Zeichnung näher erläutert. Es zeigen:
- Fig. 1: eine Längsschnittansicht einer erfindungsgemäßen Wellenkupplung;
- Fig. 2: eine Querschnittansicht der Wellenkupplung entlang der Schnittlinie A-A der Fig. 1;
- Fig. 3: eine Querschnittansicht einer erfindungsgemäßen Wellenkupplung nach einem zweiten Ausführungs- beispiel;
- Fig. 4: eine Längsschnittansicht der Nabe der Wellen- kupplung der Fig. 3;
- Fig. 5: die Nabe der Wellenkupplung der Fig. 3 in Quer- seitenansicht;
- Fig. 6: eine Querseitenansicht auf den Naben-Aufnahme- bereich des D-Flansches der Wellenkupplung der Fig. 3 (ohne Nabe);
- Fig. 7: eine Längsschnittansicht des D-Flansches der Fig. 6; und
- Fig. 8: eine Querseitenansicht des D-Flansches der Fig. 6 auf die dem Naben-Aufnahmebereich gegenüberliegende Seite.

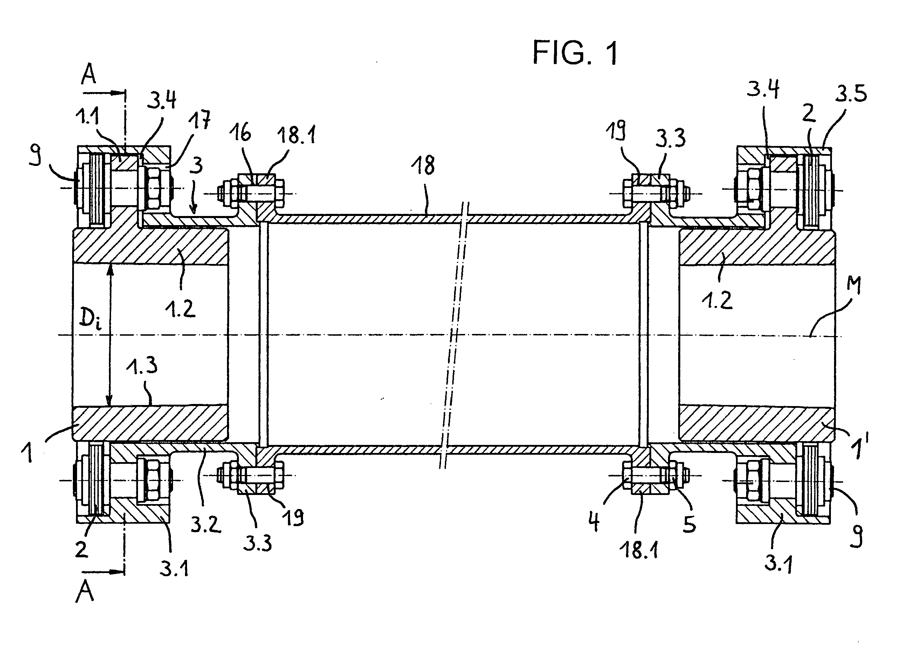

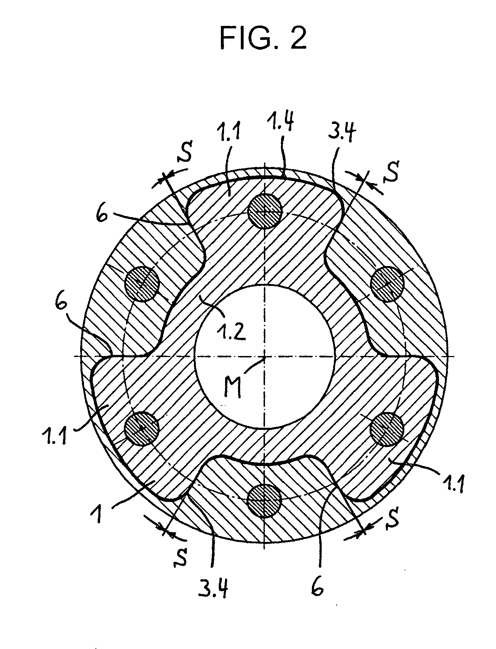

Die in den Figuren 1 und 2 dargestellte Wellenkupplung ist als flexible Ganzstahl-Wellenkupplung ausgebildet. Sie weist eine erste, antriebsseitige Nabe 1 und eine zweite, abtriebsseitige Nabe 1' auf, wobei die Naben 1, 1' jeweils über ein zugeordnetes Lamellenpaket 2 mit einem Anschlussflansch 3.1 drehstarr und axial- sowie winkelbeweglich verbunden sind. Der Anschlussflansch 3.1 ist integrales Element eines einen hülsenartigen Abschnitt 3.2 und einen zweiten integralen Anschlussflansch 3.3 aufweisenden Kupplungselements 3. Derartige Kupplungselemente 3 werden auch als D-Flansch bezeichnet.

Die beiden Kupplungselemente (D-Flansche) 3 sind über die zweiten Anschlussflansche 3.3 und eine Zwischenhülse 18 mittels Spannbolzen 4 drehstarr miteinander verbunden. Bei den Spannbolzen 4 handelt es sich um mit Bundmuttern 5 versehene Sechskant-Passschrauben. Aufgrund der beiden paarweise hintereinander geschalteten Lamellenpakete 2 ermöglicht die Wellenkupplung gemäß Fig. 1 nicht nur den Ausgleich eines Axial- sowie Winkelversatzes, sondern zusätzlich auch den Ausgleich eines Radialversatzes der zu verbindenden Wellen. Die zwischen den Kupplungselementen 3 angeordnete Zwischenhülse 18 ermöglicht die radiale Montage der Wellenkupplung und überbrückt einen größeren Abstand zwischen den zu verbindenden Wellen. Die Zwischenhülse weist hierzu Anschlussflansche 18.1 auf, in denen Bohrung 19 ausgebildet sind.

Wie in Fig. 2 gezeigt, weist die jeweilige Nabe 1, 1' der in Fig. 1 dargestellten Wellenkupplung drei gleichmäßig über den Umfang verteilt angeordnete flügelförmige Nabenflansche 1.1 auf, die mit dem rohrförmigen Nabenabschnitt 1.2 einstückig verbunden sind und davon radial nach außen abstehen. Die Naben 1, 1' weisen jeweils eine Konussitzfläche 1.3 zur Herstellung einer konischen Pressverbindung mit einer entsprechend ausgebildeten Welle auf. Alternativ kann die Welle-Nabe-Verbindung auch als Passfederverbindung, zylindrische Pressverbindung oder sonstige übliche Welle-Nabe-Verbindung ausgeführt sein. Eine konische Pressverbindung ist bei der erfindungsgemäßen Wellenkupplung jedoch bevorzugt.

Der der Nabe 1, 1' zugeordnete Anschlussflansch 3.1 weist eine der Anzahl der Nabenflansche 1.1 entsprechende Anzahl von Ausnehmungen 3.4 auf, in denen die flügelförmigen Nabenflansche 1.1 mit Spiel S formschlüssig aufgenommen sind. In dem in Fig. 2 dargestellten Ausführungsbeispiel beträgt das Spiel S zwischen der jeweiligen in Umfangsrichtung weisenden Flanke des Nabenflansches 1.1 und dem Anschlussflansch 3.1 jeweils etwa 0,44 mm bzw. etwa 0,25°. Die einander zugewandten Flanken der Nabenflansche 1.1 und Ausnehmungen 3.4 weisen eben ausgebildete Anschlagflächen 6 auf, die Kontaktflächen definieren und in Radialebenen liegen, welche die Längsmittelachse M der Wellenkupplung schneiden. Kurzfristige Überlastmomente werden durch Formschluss, d.h. durch Kontakt der einander zugewandten Anschlagflächen 6 aufgenommen. Eine Überlastung der Lamellenlaschen oder Lamellenringe des Lamellenpakets 2 wird hierdurch verhindert.

Am Außenumfang weist der jeweilige Nabenflansch 1.1 eine kreisbogenförmige Stirnfläche 1.4 auf, die sich über etwa 46° des Kreisumfangs erstreckt. Der Übergang von der ebenen Anschlagfläche 6 zu der kreisbogenförmigen Stirnfläche 1.4 ist abgerundet ausgebildet. Ferner ist zu erkennen, dass der Anschlussflansch 3.1 mit einem kreisringförmigen Kragen oder Mantel 3.5 versehen ist, der das Lamellenpaket 2 mit Spiel umgibt und dieses in axialer Richtung überragt. Bei einem eventuellen Lamellenbruch werden Bruchstücke, die aufgrund der Zentrifugalkraft weggeschleudert werden würden, durch den Mantel (Kragen) 3.5 zurückgehalten.

Das mit der Nabe 1 verbundene Lamellenpaket 2 ist auf der der Antriebsseite zugewandten Seite des Nabenflansches 1.1 angeordnet, während das Lamellenpaket 2, welches mit der abtriebsseitigen Nabe 1' verbunden ist, auf der der Abtriebsseite zugewandten Seite des Nabenflansches 1.1 angeordnet ist. Der Schwerpunkt der Wellenkupplung liegt somit relativ nahe an den Wellenlagern. Hierdurch wird die Amplitude von Schwingungen, die bei Rotation der überhängenden Wellen üblicherweise aufgrund von Unwuchten auftreten, minimiert.

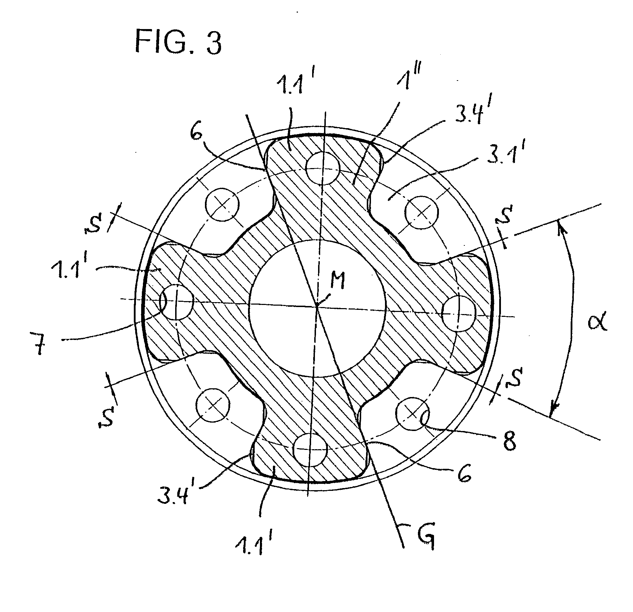

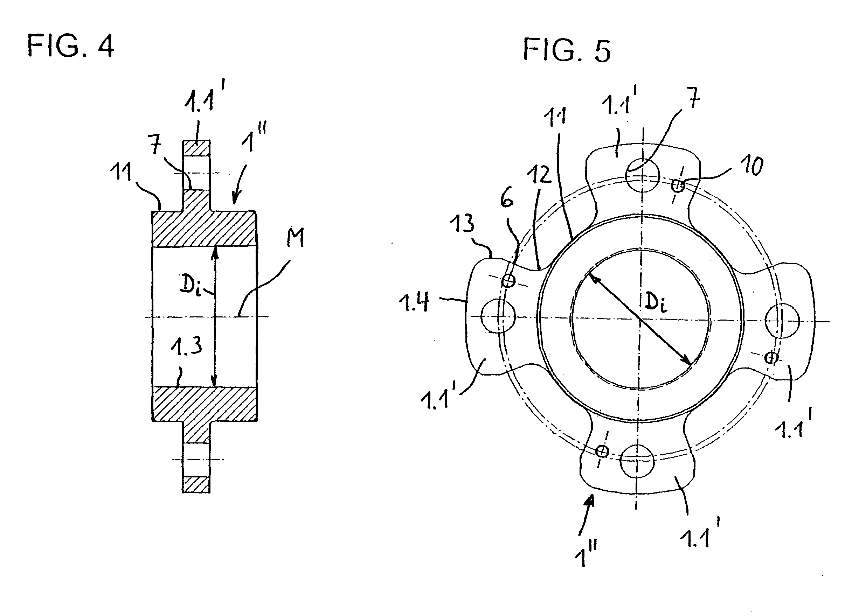

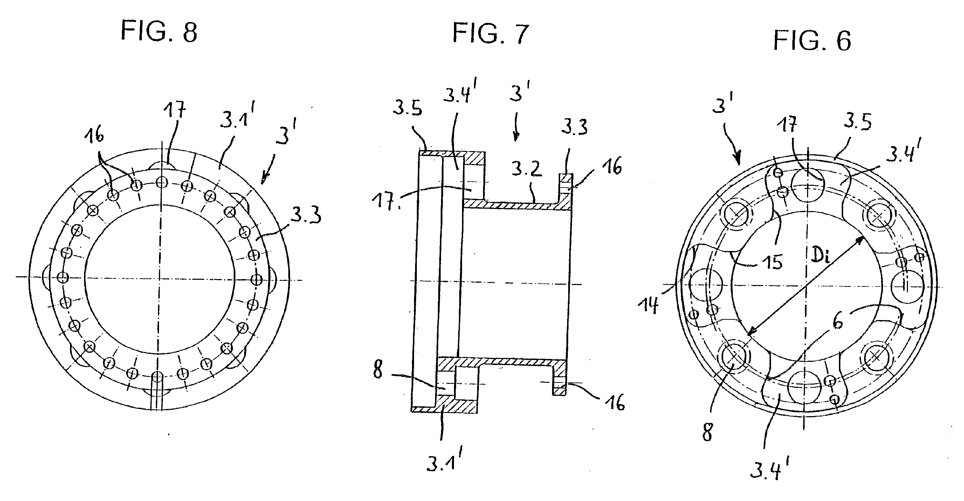

Im Unterscheid zu dem Ausführungsbeispiel gemäß den Figuren 1 und 2 weist die Nabe 1'' gemäß dem in den Figuren 3 bis 8 dargestellten Ausführungsbeispiel vier gleichmäßig über den Umfang verteilt angeordnete Nabenflansche 1.1' auf. In dem der Nabe 1" zugeordneten Anschlussflansch 3.1' ist wiederum eine entsprechende Anzahl von Ausnehmungen 3.4' ausgebildet, in denen die Nabenflansche 1.1' mit Spiel S formschlüssig aufgenommen sind. Das Spiel S zwischen den ebene Kontaktflächen definierenden Anschlagflächen 6 beträgt hier ca. 0,35 mm bzw. ca. 0,2°.

Es ist zu erkennen, dass die ebenen Kontaktflächen 6 der flügelförmigen Nabenflansche 1.1' in durch die Drehachse bzw. Längsmittelachse M der Nabe bzw. Wellenkupplung verlaufenden Radialebenen liegen. Dies ist in Fig. 3 anhand einer den Mittelpunkt bzw. die Längsmittelachse M schneidenden Geraden G verdeutlicht.

Mit 7 und 8 sind die der Befestigung der Spannbolzen 9 dienen Bohrungen der Nabe 1" bzw. des zugeordneten Anschlussflansches 3.1' bezeichnet. Die Bohrungen 10 dienen der Fixierung der Lamellenpakete 2 bei einer Auswuchtung der Wellenkupplung. Ferner dienen diese Bohrungen 10 der Fixierung der Lamellenpakete 2 für den Transport der Wellenkupplung.

In dem in Fig. 3 dargestellten Ausführungsbeispiel schließen die ebenen Kontaktflächen 6 des jeweiligen Nabenflansches 1.1' einen Winkel α von ca. 44,8° ein. Zwischen den ebenen Kontaktflächen 6 und der zylindrischen Mantelfläche 11 der Nabe 1'' ist jeweils ein stufenloser, gerundeter Kehlbereich 12 ausgebildet. Ferner ist zu erkennen, dass sich an die ebenen Kontaktflächen 6 des jeweiligen Nabenflansches 1.1' zum Außenumfang hin ebene Flankenbereiche 13 anschließen, die gegenüber den ebenen Kontaktflächen 6 abgewinkelt sind und an dem jeweiligen Nabenflansch 1.1' parallel zueinander verlaufen. Diese geradlinigen Flankenbereiche 13 gehen dann abgerundet in die äußeren kreisbogenförmigen Umfangsbereiche 1.4 des jeweiligen Nabenflansches 1.1' über.

Die Ausnehmungen 3.4' zur formschlüssigen Aufnahme der Nabenflansche 1.1' im Anschlussflansch 3.1' weisen dagegen in dem den ebenen Flankenbereichen 13 der Nabenflansche 1.1' zugewandten Bereich gerundete Kehlbereiche 14 und in dem den gerundeten Kehlbereichen 12 der Nabenflansche 1.1' zugewandten Bereich abgeschrägte Flankenbereiche 15 auf. Hierdurch ist sichergestellt, dass es in den Kehlbereichen 12 und 14 während des Betriebes der Wellenkupplung zu keinem Kontakt zwischen der Nabe 1" und dem Anschlussflansch 3.1' kommt, und zwar auch dann nicht, wenn sich die einander zugewandten ebenen Anschlagflächen (Kontaktflächen) 6 der Nabenflansche 1.1' und des Anschlussflansches 3.1' infolge einer Überlastung des Lamellenpakets 2 berühren.

Die Ausführung der Erfindung ist nicht auf die vorstehend beschriebenen Ausführungsbeispiele beschränkt. Vielmehr sind eine Vielzahl von Varianten und Modifikationen möglich, die auch bei grundsätzlich abweichender Gestaltung von der in den Ansprüchen dargelegten Erfindung Gebrauch machen. So liegt es auch im Rahmen der Erfindung, wenn die im Wesentlichen eben ausgebildeten Anschlagflächen 6 der Nabenflansche 1.1, 1.1' in Radialebenen liegen, welche die Längsmittelachse M bzw. Drehachse der Wellenkupplung nicht schneiden, sondern in Ebenen liegen, welche zumindest die die Nabe 1, 1', 1" tragende Welle schneiden, oder in Ebenen liegen, deren Abstand zur Drehachse oder Längsmittelachse M der Wellenkupplung weniger als ein Viertel, vorzugsweise weniger als ein Fünftel des Innendurchmessers Dᵢ des rohrförmigen Abschnitts der Nabe 1, 1', 1'' beträgt.

### Bezugszeichenliste

- 1: Nabe
- 1': Nabe
- 1": Nabe
- 1.1: Nabenflansch
- 1.1': Nabenflansch
- 1.2: rohrförmigen Nabenabschnitt
- 1.3: Kegelsitzfläche der Nabe
- 1.4: Stirnfläche/kreisbogenförmiger Umfangsbereich des Nabenflansches
- 2: Lamellenpaket
- 3: Kupplungselement (D-Flansch)
- 3': Kupplungselement (D-Flansch)
- 3.1: (erster) Anschlussflansch
- 3.1': (erster) Anschlussflansch
- 3.2: hülsenartiger Abschnitt des D-Flansches
- 3.3: zweiter Anschlussflansch
- 3.4: Ausnehmung
- 3.4': Ausnehmung
- 3.5: Kragen (Mantel)
- 4: Spannbolzen
- 5: Bundmutter
- 6: ebene Anschlagfläche (Kontaktfläche)
- 7: Bohrung
- 8: Bohrung
- 9: Spannbolzen
- 10: Bohrung
- 11: Mantelfläche der Nabe
- 12: Kehlbereich des Nabenflansches
- 13: ebener Flankenbereich des Nabenflansches
- 14: Kehlbereich der Anschlussflanschausnehmung
- 15: abgeschrägter Flankenbereich des Anschlussflansches
- 16: Bohrung
- 17: Bohrung
- 18: Zwischenhülse
- 18.1: Anschlussflansch(e) der Zwischenhülse
- 19: Bohrung
- Dᵢ: Innendurchmesser
- G: Gerade
- M: Längsmittelachse (Drehachse)
- S: Spiel
- α: Winkel

## Patentansprüche

1. Flexible Wellenkupplung mit mindestens einer Nabe und mindestens einem Anschlussflansch, wobei die mindestens eine Nabe (1, 1', 1") und der mindestens eine Anschlussflansch (3.1, 3.1') über ein Lamellenpaket (2), das mittels umfangsmäßig verteilt angeordneten Spannbolzen (9) wechselweise an dem Anschlussflansch (3.1, 3.1') und der Nabe (1, 1', 1") befestigt ist, drehsteif und axial- sowie winkelbeweglich miteinander verbunden sind, und wobei die mindestens eine Nabe (1, 1', 1") einen rohrförmigen Abschnitt (1.2) zur Aufnahme einer Welle aufweist, wobei
die Nabe mehrere flügelartig ausgebildete Nabenflansche (1.1, 1.1') aufweist, die einstückig mit dem rohrförmigen Abschnitt (1.2) verbunden sind und davon radial nach außen abstehen, wobei der Anschlussflansch eine entsprechende Anzahl von Ausnehmungen (3.4, 3.4') aufweist, in denen die Nabenflansche (1.1, 1.1') mit Spiel (S) formschlüssig aufgenommen sind, wobei einander zugewandte Flanken der Nabenflansche (1.1, 1.1') und Ausnehmungen (3.4, 3.4') im Wesentlichen eben ausgebildete Anschlagflächen (6) umfassen, die Kontaktflächen definieren, **dadurch gekennzeichnet, dass** die Kontaktflächen in Ebenen liegen, welche die die mindestens eine Nabe (1, 1', 1") tragende Welle schneiden.

2. Wellenkupplung nach Anspruch 1,
**dadurch gekennzeichnet, dass** die im Wesentlichen eben ausgebildeten Anschlagflächen (6) in Ebenen liegen, deren Abstand zur Drehachse oder Längsmittelachse (M) der Wellenkupplung weniger als ein Viertel, vorzugsweise weniger als ein Fünftel des Innendurchmessers (Dᵢ) des rohrförmigen Abschnitts (1.2) der Nabe (1, 1', 1") beträgt.

3. Wellenkupplung nach Anspruch 1,
**dadurch gekennzeichnet, dass** die im Wesentlichen eben ausgebildeten Anschlagflächen (6) im Wesentlichen in die Längsmittelachse (M) der Wellenkupplung schneidenden Radialebenen liegen.

4. Wellenkupplung nach einem der Ansprüche 1 bis 3,
**dadurch gekennzeichnet, dass** die radiale Erstreckung der jeweiligen Kontaktfläche prober/gleich der axialen Breite des Nabenflansches (1.1, 1.1') ist.

5. Wellenkupplung nach einem der Ansprüche 1 bis 4,
**dadurch gekennzeichnet, dass** die Nabe (1, 1') drei gleichmäßig über den Umfang verteilt angeordnete Nabenflansche (1.1) aufweist.

6. Wellenkupplung nach einem der Ansprüche 1 bis 4,
**dadurch gekennzeichnet, dass** die Nabe (1") vier gleichmäßig über den Umfang verteilt angeordnete Nabenflansche (1.1') aufweist.

7. Wellenkupplung nach einem der Ansprüche 1 bis 6,
**dadurch gekennzeichnet, dass** das Spiel (S) zwischen den Anschlagflächen (6) im Bereich von 0,25 mm und 1,0 mm liegt.

8. Wellenkupplung nach einem der Ansprüche 1 bis 7,
**dadurch gekennzeichnet, dass** diese eine erste, einer Antriebswelle zugeordnete Nabe (1) und eine zweite, einer Abtriebswelle zugeordnete Nabe (1') aufweist, wobei die beiden Naben jeweils über ein zugeordnetes Lamellenpaket (2) mit einem Anschlussflansch (3.1) drehstarr und axial- sowie winkelbeweglich verbunden sind, wobei die beiden Anschlussflansche (3.1) jeweils integrales Element eines einen zweiten integralen Anschlussflansch (3.3) und einen hülsenartigen Abschnitt (3.2) aufweisenden Kupplungselements (3) sind, und wobei die beiden Kupplungselemente (3) über eine zwischen den zweiten Anschlussflanschen (3.3) angeordnete Zwischenhülse (18) mittels Spannbolzen (4) drehstarr miteinander verbunden sind.

9. Wellenkupplung nach Anspruch 8,
**dadurch gekennzeichnet, dass** das jeweilige Lamellenpaket (2) auf der Seite des Nabenflansches (1.1, 1.1') angeordnet ist, die dem Wellenlager der die zugehörige Nabe (1, 1', 1") tragenden Welle zugewandt ist.

10. Wellenkupplung nach einem der Ansprüche 1 bis 9,
**dadurch gekennzeichnet, dass** die Nabe oder Naben (1, 1', 1") jeweils eine Konussitzfläche (1.3) zur Herstellung einer konischen Pressverbindung mit einer entsprechend ausgebildeten Welle aufweisen.

11. Wellenkupplung nach einem der Ansprüche 1 bis 9,
**dadurch gekennzeichnet, dass** die Nabe oder Naben (1) jeweils eine zylindrische Sitzfläche zur Herstellung einer zylindrischen Pressverbindung mit einer entsprechend ausgebildeten Welle aufweisen.

12. Wellenkupplung nach einem der Ansprüche 1 bis 9,
**dadurch gekennzeichnet, dass** die Nabe order Naben (1) mindestens eine Ausnehmung zur formschlüssigen Aufnahme einer Passfeder aufweist.

## Claims

1. Flexible shaft coupling with at least one hub and at least one connection flange, the at least one hub (1, 1', 1'') and the at least one connection flange (3.1, 3.1') being connected to one another in a torsionally stiff and axially and angularly movable manner via a disc pack (2), which is secured alternately on the connection flange (3.1, 3.1') and the hub (1, 1', 1") by means of clamping bolts (9) arranged in a circumferentially distributed manner, and the at least one hub (1, 1', 1'') having a tubular section (1.2) to receive a shaft, the hub having a plurality of hub flanges (1.1, 1.1') of wing-type design, which are connected integrally to the tubular section (1.2) and project radially outwards therefrom, the connection flange having a corresponding number of recesses (3.4, 3.4'), in which the hub flanges (1.1, 1.1') are accommodated in a form-fitting manner with a clearance (S), mutually facing flanks of the hub flanges (1.1, 1.1') and recesses (3.4, 3.4') comprising stop surfaces (6) of substantially flat design which define contact surfaces, **characterized in that** the contact surfaces lie in planes which intersect the shaft carrying the at least one hub (1, 1', 1'').

2. Shaft coupling according to Claim 1, **characterized in that** the stop surfaces (6) of substantially flat design lie in planes, the distance of which from the axis of rotation or longitudinal centre line (M) of the shaft coupling is less than one quarter, preferably less than one fifth, of the inside diameter (Dᵢ) of the tubular section (1.2) of the hub (1, 1', 1") .

3. Shaft coupling according to Claim 1, **characterized in that** the stop surfaces (6) of substantially flat design lie substantially in radial planes which intersect the longitudinal centre line (M) of the shaft coupling.

4. Shaft coupling according to one of Claims 1 to 3, **characterized in that** the radial extent of the respective contact surface is greater than or equal to the axial width of the hub flange (1.1, 1.1').

5. Shaft coupling according to one of Claims 1 to 4, **characterized in that** the hub (1, 1') has three hub flanges (1.1) arranged in a uniformly distributed manner over the circumference.

6. Shaft coupling according to one of Claims 1 to 4, **characterized in that** the hub (1") has four hub flanges (1.1') arranged in a uniformly distributed manner over the circumference.

7. Shaft coupling according to one of Claims 1 to 6, **characterized in that** the clearance (S) between the stop surfaces (6) is within a range of from 0.25 mm to 1.0 mm.

8. Shaft coupling according to one of Claims 1 to 7, **characterized in that** the coupling has a first hub (1) assigned to an input shaft and a second hub (1') assigned to an output shaft, the two hubs each being connected in a torsionally rigid and axially and angularly movable manner to a connection flange (3.1) via an associated disc pack (2), the two connection flanges (3.1) each being an integral element of a coupling element (3) having a second integral connection flange (3.3) and a sleeve-type section (3.2), and the two coupling elements (3) being connected to one another in a torsionally rigid manner by means of clamping bolts (4) via an intermediate sleeve (18) arranged between the second connection flanges (3.3).

9. Shaft coupling according to Claim 8, **characterized in that** the respective disc pack (2) is arranged on the side of the hub flange (1.1, 1.1') which faces the shaft bearing of the shaft carrying the associated hub (1, 1', 1'').

10. Shaft coupling according to one of Claims 1 to 9, **characterized in that** the hub or hubs (1, 1', 1") each have a tapered seating surface (1.3) for the purpose of establishing a tapered press-fit connection with a correspondingly designed shaft.

11. Shaft coupling according to one of Claims 1 to 9, **characterized in that** the hub or hubs (1) each have a cylindrical seating surface for the purpose of establishing a cylindrical press-fit connection with a correspondingly designed shaft.

12. Shaft coupling according to one of Claims 1 to 9, **characterized in that** the hub or hubs (1) has/have at least one recess for the form-fitting reception of a key.

## Revendications

1. Accouplement d'arbre flexible comprenant au moins un moyeu et au moins une bride de raccordement, le au moins un moyeu (1, 1', 1") et la au moins une bride ( 3.1, 3.1') de raccordement étant solidarisés en rotation, tout en étant mobiles axialement ainsi qu'angulairement, par l'intermédiaire d'un paquet ( 2 ) de lamelles qui est fixé alternativement à la bride ( 3.1, 3.1') de raccordement et au moyeu (1, 1', 1") au moyen de boulons ( 9 ) de blocage répartis sur le pourtour, le au moins un moyeu ( 1, 1', 1" ) ayant un tronçon ( 1.2 ) tubulaire de réception d'un arbre, dans lequel le moyeu a plusieurs brides ( 1.1, 1.1' ) de moyeu constituées à la manière d'ailes, qui sont reliées d'une seule pièce avec le tronçon ( 1.2 ) tubulaire et s'en écartent radialement vers l'extérieur, la bride de raccordement ayant un nombre correspondant d'évidements ( 3.4, 3.4' ), dans lesquels les brides ( 1.1, 1.1' ) de moyeu sont reçues à complémentarité de forme avec jeu ( S ), des flancs, tournés l'un vers l'autre, des brides ( 1.1, 1.1' ) de moyeu et des évidements ( 3.4, 3.4' ) comprenant des surfaces ( 6 ) de butée sensiblement planes, qui définissent des surfaces de contact, **caractérisé en ce que** les surfaces de contact se trouvent dans des plans qui coupent l'arbre portant le au moins un moyeu ( 1, 1', 1'' ) .

2. Accouplement d'arbre suivant la revendication 1, **caractérisé en ce que** les surfaces ( 6 ) de butée, constituées de manière sensiblement planes, se trouvent dans des plans dont la distance à l'axe de rotation ou à l'axe ( M ) longitudinal de médian de l'accouplement d'arbre représente moins d'un quart, de préférence moins d'un cinquième, du diamètre ( Di ) intérieur du tronçon ( 1.2 ) tubulaire du moyeu ( 1, 1', 1" ).

3. Accouplement d'arbre suivant la revendication 1, **caractérisé en ce que** les surfaces ( 6 ) de butée, constituées de manière sensiblement plane, se trouvent sensiblement dans l'axe ( M ) longitudinal médian des plans radiaux coupant l'accouplement d'arbre.

4. Accouplement d'arbre suivant l'une des revendication 1 à 3,
**caractérisé en ce que** l'étendue radiale la surface respective de contact est supérieure/égale à la largeur axiale de la bride ( 1.1, 1.1' ) de moyeu.

5. Accouplement d'arbre suivant l'une des revendication 1 à 4,
**caractérisé en ce que** le moyeu ( 1, 1' ) comporte trois brides ( 1.1 ) de moyeu réparties uniformément sur le pourtour.

6. Accouplement d'arbre suivant l'une des revendication 1 à 4,
**caractérisé en ce que** le moyeu ( 1" ) a quatre brides ( 1.1' ) de moyeu réparties uniformément sur le pourtour.

7. Accouplement d'arbre suivant l'une des revendication 1 à 6,
**caractérisé en ce que** le jeu ( S ) entre les surfaces ( 6 ) de butée est compris entre 0,25 mm et 1,0 mm.

8. Accouplement d'arbre suivant l'une des revendication 1 à 7,
**caractérisé en ce qu'**il a un premier moyeu ( 1 ) associé à un arbre d'entrée et un deuxième moyeu ( 1' ) associé à un arbre de sortie, les deux moyeux étant solidarisés en rotation tout en étant mobiles axialement ainsi qu'angulairement avec une bride ( 3.1 ) de raccordement respectivement par un paquet ( 2 ) de lamelles associé, les deux brides ( 3.1 ) de raccordement étant respectivement un élément intégral d'un élément ( 3 ) d'accouplement comportant une deuxième bride ( 3.3 ) intégrale de raccordement et un tronçon ( 3.2 ) en forme de manchon, et dans lequel les deux éléments ( 3 ) d'accouplement sont solidarisés en rotation au moyen de boulons ( 4 ) de blocage par une douille ( 18 ) intermédiaire disposée entre les deux brides ( 3.3 ) de raccordement.

9. Accouplement d'arbre suivant la revendication 8,
**caractérisé en ce que** le paquet ( 2 ) respectif de lamelles est disposé du côté de la bride ( 1.1, 1.1' ) de moyeu, qui est tourné vers le palier de l'arbre portant le moyeu ( 1, 1', 1" ) associé.

10. Accouplement d'arbre suivant l'une des revendication 1 à 9,
**caractérisé en ce que** le moyeu ou les moyeux ( 1, 1'1, 1''" ) ont respectivement une surface ( 1.3 ) de siège conique pour ménager une liaison serrée conique avec un arbre constitué de manière correspondante.

11. Accouplement d'arbre suivant l'une des revendication 1 à 9,
**caractérisé en ce que** le moyeu ou les moyeux ( 1 ) ont respectivement une surface de siège cylindrique pour ménager une liaison serrée cylindrique avec un arbre constitué de manière correspondante.

12. Accouplement d'arbre suivant l'une des revendication 1 à 9,
**caractérisé en ce** le moyeu ou les moyeux ( 1 ) comportent au moins un évidement pour la réception à complémentarité de forme d'une clavette d'assemblage.
